⑲ ))) **Europäisches Patentamt**

**European Patent Office**

**Office européen des brevets**

(11) Numéro de publication: **0 150 149**
**B1**

(12) **FASCICULE DE BREVET EUROPEEN**

(45) Date de publication du fascicule du brevet:
**13.07.88**

(21) Numéro de dépôt: **85400065.0**

(22) Date de dépôt: **15.01.85**

(51) Int. Cl.⁴: **G 01 N 23/12**

(54) **Sonde de mesure du taux de vide local d'une émulsion diphasique.**

(30) Priorité: **20.01.84  FR 8400881**

(43) Date de publication de la demande:
**31.07.85 Bulletin 85/31**

(45) Mention de la délivrance du brevet:
**13.07.88 Bulletin 88/28**

(84) Etats contractants désignés:
**DE GB IT**

�titleDocuments cités:
**DE - B - 1 260 172**
**GB - A - 1 153 026**
**US - A - 3 688 115**

**JOURNAL OF PHYSICS E: SCIENTIFIC INSTRUMENTS,
volume 13, no. 3, mars 1980, pages 341-345, Bristol, GB;
M. ABOUELWAFA et al.: "The measurement of
component ratios in multiphase systems using gamma
ray attenuation"**
**J. ROCKLEY: "An introduction to Industrial Radiology",
chapitre 3, "Gamma ray sources for industrial
radiography", pages 47-61**
**NUCLEAR INSTRUMENTS AND METHODS, volume 190,
no. 1, novembre 1981, pages 135-148, Amsterdam, NL;
A. CHAN et al.: "Design aspects of gamma
densitometers for void fraction measurements in small
scale two-phase flows"**

(73) Titulaire: **COMMISSARIAT A L'ENERGIE ATOMIQUE,
31/33, rue de la Fédération, F-75015 Paris (FR)**

(72) Inventeur: **Gouirand, Jean-Marie, Le Pigeonnier Rue du
Claou, F-13770 Venelles (FR)**

(74) Mandataire: **Mongrédien, André et al, c/o
BREVATOME 25, rue de Ponthieu, F-75008 Paris (FR)**

## Description

La présente invention concerne une sonde de mesure du taux de vide local d'une émulsion diphasique, à source de rayonnement intégrée, par atténuation de ce rayonnement.

On rapelle que le taux de vide local est la moyenne temporelle de la fonction de phase et qu'il est égal au rapport des temps de présence d'une phase sur la somme des temps de présence des deux phases dans la zone de mesure.

On connaît und grand nombre de dispositifs permettant de mesurer le taux de vide local dans une émulsion, ou milieu, diphasique, dispositifs tels que les sondes optiques, les sondes résistives, les anémomètres et les micro-thermocouples par exemple. Ces dispositifs ne permettent de mesurer qu'un taux de vide ponctuel et nécessitent un étalonnage préalable, effectué à l'aide d'installations particulières; en outre, la plupart de ces sondes sont mécaniquement très fragiles. Une sonde de mesure du taux de vide d'un milieu diphasique est décrite notamment dans le document Nuclear Instruments and Methods, volume 190, N° 1, novembre 1981, pages 135–148. Cette sonde fait usage d'une source de rayonnement γ et d'un détecteur places respectivement à l'entrée et à la sortie du canal d'un collimateur, ledit canal étant traversé perpendiculairement par une conduite dans laquelle circule le milieu objet de la mesure.

La présente invention a pour objet une sonde de mesure du taux de vide local d'une émulsion diphasique qui ne présente pas les inconvénients précédents: elle permet, sans étalonnage préalable, de mesurer le taux de vide moyen sur une distance préréglée; elle est réalisée à l'aide d'un matériau très résistant qui lui confère une robustesse suffisante pour être utilisée dans des conditions sévères de pression et de température, par exemple à l'intérieur d'un échangeur de chaleur.

De façon précise, la présente invention a pour objet une sonde de mesure du taux de vide local d'une émulsion diphasique, ladite sonde comprenant:

– un tube fait d'un matériau métallique apte à résister à des conditions sévères de température et de pression, ce tube étant de faible diamètre, par exemple de l'ordre de 5 mm, et comportant, près de l'une de ses extrémités, une portion percée d'une fenêtre permettant la circulation de l'émulsion diphasique,
– une source de rayonnement γ de faible énergie, disposée à l'intérieur du tube, à ladite extrémité,
– un collimateur d'émission, placé d'un côté de la fenêtre et de façon à collimater, en direction de ladite portion, le rayonnement émis par la source,
– un collimateur de détection, placé de l'autre côté de la fenêtre et prévu pour collimater le rayonnement émis par la source et ayant traversé ladite portion, le collimateur d'émission et le collimateur de détection étant étanches aux fluides, et

– des moyens de détection du rayonnement, disposés à la suite du collimateur de détection et à l'opposé de la source par rapport à la fenêtre.

Le matériau métallique dont est constitué le tube est par exemple l'acier et de préférence l'acier inoxydable.

La nature et l'intensité de la source de rayonnement, ainsi que la nature et la position des moyens de tétection par rapport à cette source, sont déterminées par les conditions expérimentales, telles que la pression et la température, ainsi que par les dimensions qu'il est possible de donner à la sonde.

Selon un mode de réalisation avantageux de l'invention, la source est une source de Thulium 170 qui est un émetteur de rayonnement γ de 84 keV, facile à collimater. En outre, le Thulium 170 permet d'obtenir de très fortes activités spécifiques et a des caractéristiques très intéressantes, notamment un point de fusion élevé de l'ordre de 1600°C. Enfin, l'utilisation de Thulium 170 comme source de rayonnement permet de fabriquer une sonde selon l'invention de très faible diamètre et de longueur importante.

Dans une réalisation particulière de l'invention, les moyens de détection sont situés au voisinage immédiat du collimateur de détection.

Dans une autre réalisation particulière, les moyens de détection sont situés à l'extérieur de l'enceinte contenant l'émulsion.

Selon un mode de réalisation non revendiqué, les moyens de détection peuvent comprendre un cristal de iodure de sodium de taille inférieure au diamètre du tube, accolé au collimateur de détection et relié à un photomultiplicateur, soit directement, soit par l'intermédiaire d'un guide de lumière.

Selon un autre mode de réalisation également non revendiqué, les moyens de détection comprennent une chambre d'ionisation placée à l'extérieur de l'enceinte. Cette disposition permet d'effectuer des mesures à une température élevée.

La présente invention sera mieux comprise à la lecture de la description qui suit, d'exemples de réalisation, en référence aux dessins annexés sur lesquels:

la fig. 1 est une vue schématique d'un mode de réalisation particulier de la sonde objet de l'invention, et

les figures 2 à 5 sont des vues schématiques montrant diverses réalisations et dispositions pour les moyens de détection d'une sonde selon l'invention.

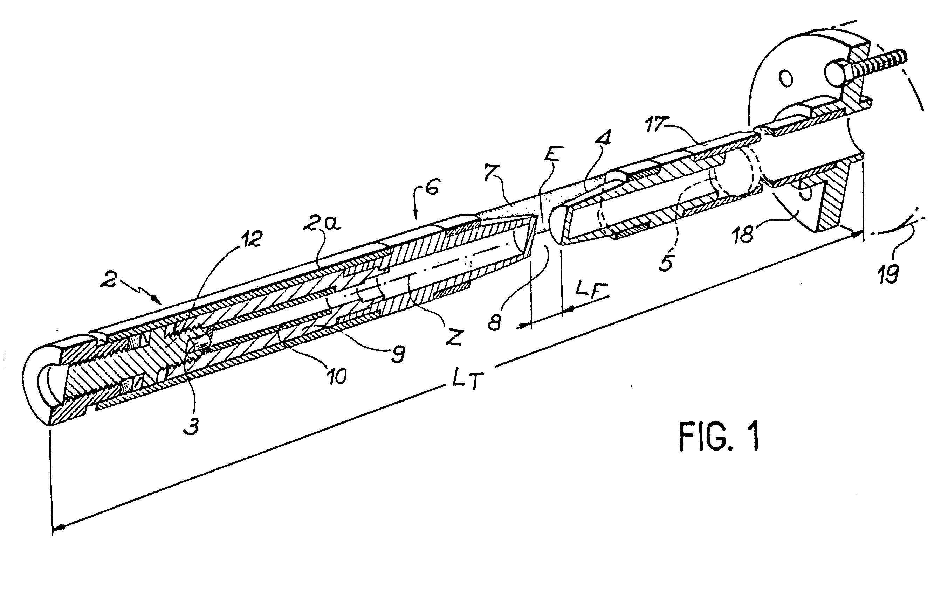

Sur la fig. 1 on a représenté schématiquement un mode de réalisation particulier de la sonde objet de l'invention.

Il comprend:

un tube 2 d'axe Z, fait d'un matériau métallique apte à résister à des conditions sévères de température et de pression, ce tube étant de faible diamètre et comportant, près de l'une de ses extrémités 2a, une portion 7 percée d'une fenêtre 8 permettant la circulation d'une émulsion diphasique,

– une source 3 de rayonnement γ de faible énergie, disposée à l'intérieur du tube 2, à ladite extrémité 2a,

– un collimateur d'émission 6 ayant la forme d'un tube d'axe Z, communiquant avec la source 3, placé du même côté de la fenêtre 8 que cette source et prévu pour collimater, en direction de la portion 7 du tube 2, le rayonnement émis par la source,

– un collimateur de détection 4 ayant également la forme d'un tube d'axe Z, placé de l'autre côté de la fenêtre 8 et prévu pour collimater le rayonnement émis par la source et ayant traversé la portion 7 du tube 2, et

– des moyens 5 de détection plus simplement appelés «détecteur» et disposés à la suite du collimateur de détection et à l'opposé de la source 3 par rapport à la fenêtre 8.

Le collimateur d'émission 6 et le collimateur de détection 4 sont étanches aux fluides. Ils sont insérés dans le tube 2 de part et d'autre de la portion 7 de ce dernier, cette portion 7 jouant ainsi le rôle de raccord d'axe Z entre les deux collimateurs. Ceux-ci sont donc séparés par un espace E correspondant au volume de mesure et autorisant la circulation du milieu diphasique dans lequel la sonde est destinée à être plongée.

Le collimateur d'émission 6 comprend un collimateur de source 9 et un canon 10. Le collimateur de source s'étend jusqu'au voisinage de l'extrémité 2a du tube 2. La source 3 est située à l'intérieur d'une porte-source 12 qui est vissé à l'extrémité du collimateur de source 9 de façon que la source 3 se trouve en regard de l'espace E.

La partie 17 du tube 2 située à l'opposé de l'extrémité 2a par rapport à la fenêtre 8 constitue le corps de sonde. Dans le cas où le détecteur 5 est un photo-scintillateur, par exemple en NaI, placé au voisinage immédiat du collimateur de détection 4, dans le corps de sonde 17, celui-ci peut être terminé par une bride 18 de manière à relier le collimateur de détection à cette bride, cette dernière servant alors à la fixation du blindage d'un photomultiplicateur 19 associé au photo-scintilateur.

Les différentes pièces constituant la sonde représentée sur la figure 1 peuvent être réalisées en acier inoxydable, sauf en ce qui concerne la source 3 et le détecteur 5 bien entendu, et en ce qui concerne le canon 10 qui est réalisé en un matériau dur et absorbeur de rayonnement γ, comme le tantale par exemple. Le canon 10 est ainsi capable de bien collimater le rayonnement γ issu de la source 3.

A titre indicatif et non limitatif, la longueur totale $L_T$ de la sonde, du porte-source 12 à la bride 18, est de l'ordre de 800 mm, le diamètre de la sonde est de l'ordre de 5 mm et le détecteur en NaI se présente sous la forme d'une plaquette circulaire de l'ordre de 4 mm de diamètre.

La sonde est par exemple destinée à être insérée dans le faisceau de tubes d'un échangeur de chaleur ou d'un générateur de vapeur. Elle est alors réalisée de manière que les extrémités des collimateurs 4 et 6, situées en regard l'une de l'autre, soient séparées d'une distance $L_F$ prédéterminée, par exemple égale à une maille du faisceau de tubes.

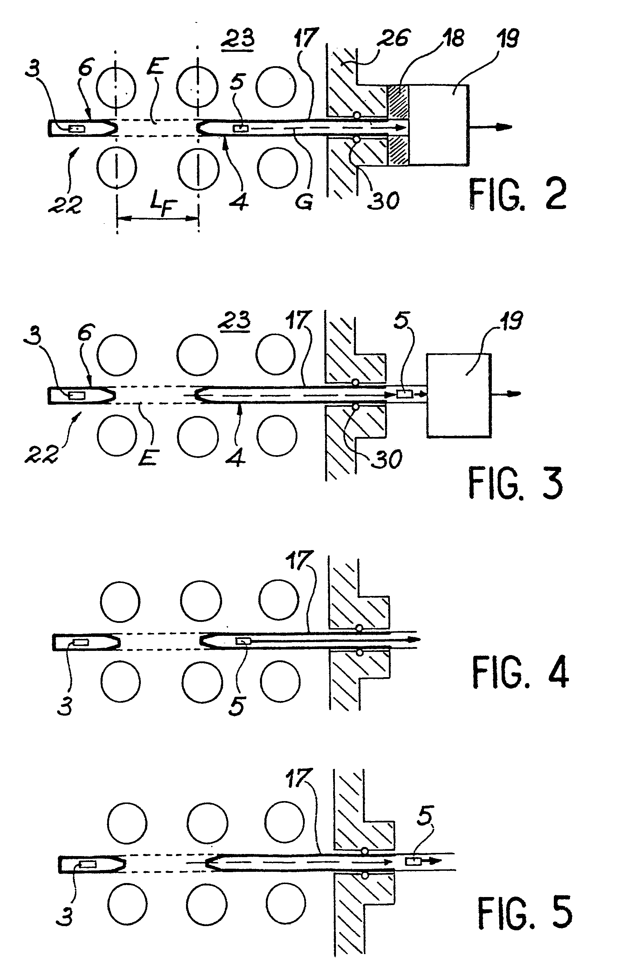

Sur les figures 2 à 5, la sonde 22, du genre de celle qui est représentée sur la figure 1, est introduite dans un milieu diphasique 23, contenu dans une enceinte 26 (que la sonde traverse de façon étanche, par exemple à l'aide d'un joint d'étanchéité 30), pour mesurer le taux de vide local dans le volume de mesure délimité par la distance $L_F$ entre les extrémités des collimateurs 4 et 6, situées en regard l'une de l'autre.

Dans le cas des figures 2 et 3, le détecteur 5 consiste en un photoscintillateur associé au photomultiplicateur 19 et optiquement couplé à ce dernier soit directement (c'est-à-dire sans moyen intermédiaire), soit par l'intermédiaire d'un guide de lumière G (figure 2).

Sur la figure 2, le détecteur 5 proprement dit (photoscintillateur) est placé dans le corps de sonde 17, au voisinage immédiat du collimateur de détection 4, ceci étant possible lorsque la température du milieu diphasique est assez faible pour ne pas endommager le photoscintillateur (le photomultiplicateur étant monté sur la bride 18).

Sur la figure 3, au contraire, cette température étant trop élevée, le photoscintillateur est disposé à l'extérieur de l'enceinte 26 contenant le milieu diphasique 23, toujours en regard, d'un côté, du collimateur de détection 4 et, de l'autre, du photomultiplicateur.

Dans le cas des figures 4 et 5, le détecteur 5 consiste en une chambre d'ionisation. Dans le cas de la figure 4, homologue de la figure 2, la chambre d'ionisation est placée dans le corps de sonde 17, au voisinage immédiat du collimateur de détection 4. Dans le cas de la figure 5, homologue de la figure 3, les conditions du milieu diphasique 23 étant trop sévères, la chambre d'ionisation est placée, toujours en regard du collimateur de détection, à l'extérieur de l'enceinte 26 contenant le milieu diphasique 23.

Le rayonnement γ émis par la source est atténué, lors de sa traversée de l'espace E compris entre les deux collimateurs, par le milieu diphasique présent dans cet espace, d'une façon caractéristique du taux de vide local dans l'espace E. Le photomultiplicateur (figures 2 et 3) ou la chambre d'ionisation (figures 4 et 5) émet alors un signal électrique caractéristique de ce taux de vide local, ce signal étant ensuite traité par des moyens classiques non représentés, aptes à déterminer le taux de vide local.

La sonde selon l'invention présente de nombreux avantages par rapport aux moyens connus de mesure du taux de vide local. Outre ceux qui ont déjà été énumérés ci-dessus, on note que l'utilisation dans la sonde selon l'invention, d'une source de faible énergie et de période relativement courte, permet d'éviter les systèmes de protection biologique ce qui rend plus souple son utilisation en laboratoire aussi bien qu'en milieu industriel.

## Revendications

1. Sonde de mesure du taux de vide local d'une émulsion diphasique (23), ladite sonde, comprenant:
- un tube (2) fait d'un matériau métallique apte à résister à des conditions sévères de température et de pression, ce tube (2) étant de faible diamètre, par exemple de l'ordre de 5 mm, et comportant, près de l'une de ses extrémités (2a), une portion (7) percée d'une fenêtre (8) permettant la circulation de l'émulsion diphasique,
- und source (3) de rayonnement γ de faible énergie, disposée à l'intérieur du tube (2), à ladite extrémité (2a),
- un collimateur d'émission (6), placé d'un côté de la fenêtre (8) et de façon à collimater, en direction de ladite portion (7), le rayonnement émis par la source (3),
- un collimateur de détection (4), placé de l'autre côté de la fenêtre (8) et prévu pour collimater le rayonnement émis par la source (3) et ayant traversé ladite portion (7), le collimateur d'émission (6) et le collimateur de détection (4) étant étanches aux fluides, et
- des moyens de détection (5) du rayonnement, disposés à la suite du collimateur de détection (4) et à l'opposé de la source (3) par rapport à la fenêtre (8).

2. Sonde selon la revendication 1, selon laquelle la source (3) est une source de Thulium 170.

3. Sonde selon la revendication 1, selon laquelle les moyens de détection (5) sont situés au voisinage immédiat du collimateur de détection (4).

4. Sonde selon la revendication 1, selon laquelle, l'émulsion diphasique (23) étant contenue dans une enceinte (26), les moyens de détection (5) sont situés à l'extérieur de cette enceinte (26).

## Claims

1. Probe for measuring the degree of local vacuum of a two-phase emulsion (23), the said probe comprising
- a tube (2) made of a metallic material capable of withstanding severe conditions of temperature and of pressure, this tube (2) being of small diameter, for example of the order of 5 mm, and comprising, near one of its ends (2a), a portion (7) pierced by a window (8) permitting the circulation of the two-phase emulsion,
- a source (3) of low-energy γ radiation, disposed within the tube (2), at the said end (2a),
- an emission collimator (6), placed on one side of the window (8) and in such a manner as to collimate, in the direction of the said portion (7), the radiation emitted by the source (3),
- a detection collimator (4), placed on the other side of the window (8) and provided to collimate the radiation emitted by the source (3) and having traversed the said portion (7), the emission collimator (6) and the detection collimator (4) being sealed against fluids, and
- means (5) for detecting the radiation, which are disposed downstream of the detection collimator (4) and opposite the source (3) in relation to the window (8).

2. Probe according to Claim 1, according to which the source (3) is a thulium 170 source.

3. Probe according to Claim 1, according to which the detecting means (5) are situated in the immediate vicinity of the detection collimator (4).

4. Probe according to Claim 1, according to which, the two-phase emulsion (23) being contained within an enclosure (26), the detecting means (5) are situated outside this enclosure (26).

## Patentansprüche

1. Messgerät zur Bestimmung des örtlichen Leeranteils in einer Zweiphasenemulsion (23), wobei das genannte Messgerät umfasst:
- ein Rohr (2) aus einem Metallmaterial, welches verschärften Temperatur- und Druckbedingungen widerstehen kann, wobei dieses Rohr (2) einen kleinen Durchmesser, z.B. in der Grössenordnung von 5 mm, aufweist und nahe dem einen seiner Enden (2a) einen mit einem Fenster (8) durchbrochenen Abschnitt (7) aufweist, welches die Durchströmung der Zweiphasenemulsion erlaubt,
- eine γ-Strahlungsquelle (3) geringer Energie, die im Innern des Rohrs (2) an dem genannten Ende (2a) angeordnet ist,
- einen Emissionskollimator (6), der an einer Seite des Fensters (8) derart angeordnet ist, dass die von der Quelle (3) emittierte Strahlung in Richtung zu dem genannten Abschnitt (7) kollimiert wird,
- einen Erfassungskollimator (4), der auf der anderen Seite des Fensters (8) angeordnet und vorgesehen ist, um die von der Quelle (3) emittierte und durch den genannten Abschnitt (7) hindurchgegangene Strahlung zu kollimieren, wobei der Emissionskollimator (6) und der Erfassungskollimator (4) in bezug auf Fluide dicht sind, und
- Strahlungserfassungsmittel (5), die den Erfassungskollimator (4) nachfolgend und in bezug auf das Fenster (8) der Quelle (3) gegenüberliegend angeordnet sind.

2. Einrichtung nach Anspruch 1, bei der die Quelle (3) eine Thulium-170-Quelle ist.

3. Einrichtung nach Anspruch 1, bei der sich die Erfassungsmittel (5) in unmittelbarer Nähe des Erfassungskollimators (4) befinden.

4. Einrichtung nach Anspruch 1, bei der die Zweiphasenemulsion (23) in einem Behälter (26) enthalten ist und sich die Erfassungsmittel (5) ausserhalb dieses Behälters (26) befinden.

FIG. 1

FIG. 2

FIG. 3

FIG. 4

FIG. 5